# EUROPEAN PATENT SPECIFICATION

(11) **EP 2 990 218 B1**
(45) Date of publication and mention of the grant of the patent: **02.01.2019**
(21) Application number: 15180697.3
(22) Date of filing: 12.08.2015
(51) Int. Cl.: B60C 1/00, C08C 19/20, C08C 19/22, C08C 19/25, C08C 19/44, C08L 15/00, C08L 19/00

(54) **RUBBER COMPOSITION AND TIRE WITH SILICA-RICH RUBBER TREAD**
KAUTSCHUKZUSAMMENSETZUNG UND REIFEN MIT KIESELSÄUREREICHER KAUTSCHUKLAUFFLÄCHE
COMPOSITION DE CAOUTCHOUC ET PNEU COMPORTANT UNE SEMELLE D'USURE EN CAOUTCHOUC À FORTE TENEUR EN SILICIUM

(30) Priority: 26.08.2014 US 201462041688 P; 26.06.2015 US 201514751367
(43) Date of publication of application: 02.03.2016
(73) Proprietor: The Goodyear Tire & Rubber Company, Akron, Ohio 44316 (US)
(72) Inventor: PAPAKONSTANTOPOULOS, George Jim, Medina, OH Ohio 44256 (US); JIANG, Bing, Copley, OH Ohio 44321 (US); HAHN, Bruce Raymond, Hudson, OH Ohio 44210 (US)
(74) Representative: Kutsch, Bernd

(56) References cited:
- EP-A1- 2 412 731
- US-A1- 2012 123 018
- US-A1- 2013 165 578
- US-A1- 2014 135 437

## Description

### Field of the Invention

This invention relates to pneumatic rubber tires having a tread comprising a silica-rich rubber composition. It also relates to a respective rubber composition.

### Background of the Invention

It is desired for pneumatic rubber tires to have circumferential rubber treads which promote beneficially low rolling resistance and tread wear resistance as well as traction. The low rolling resistance of the rubber tread for the tire promotes vehicular fuel economy for an associated vehicle and is considered as being predicatively indicated by a relatively low rebound physical property of the tread's rubber composition which, in turn is indicative of a lower hysteresis of the rubber composition which leads to lower internal heat generation within the tread rubber during operation of the tire. Tread wear resistance may be generally predicatively indicated by abrasion resistance of the tread rubber. Increased abrasion resistance of the rubber composition may therefore often be predictive of increased resistance to tread wear. Finally, traction of the tread running surface on a road surface is considered beneficial to promote handling of the tire for its associated vehicle.

Overall, the rubber characteristics of the tire tread are dependent, to a large extent upon the dynamic viscoelastic properties of the tire tread rubber composition which, in turn, are affected by the selection of elastomers and reinforcing fillers for the rubber composition. In practice, pneumatic tires for passenger automobiles are often composed of synthetic elastomers such as, for example, a combination of styrene/butadiene and cis 1,4-polybutadiene elastomers. Reinforcing fillers for the rubber composition have been at least one of rubber reinforcing carbon black and precipitated silica.

A challenge is presented for providing a pneumatic tire, particularly a passenger tire, with a tread for which relatively low rolling resistance is promoted together with acceptable abrasion resistance and traction performance. For this evaluation, it is proposed to restrict the inclusion of rubber reinforcing carbon black filler to a maximum of 15 phr and desirably to a range of from about 2 to 6 phr. It is recognized that such a low level of carbon black does not provide significant rubber reinforcement and therefore primarily acts as a colorant, namely a black colorant, for the rubber composition. In this manner, the rubber reinforcement relies primarily on silica, preferably precipitated silica, together with the coupling agent. The challenge is further presented for providing a high content of functionalized styrene/butadiene elastomer with the associated low carbon black reinforcement content. Further, for this evaluation, it is proposed to provide a high level of paraffinic/naphthenic rubber processing oil in form of paraffinic/naphthenic oil having a high paraffinic oil content of preferably 45 to 55 weight percent and a naphthenic oil content of preferably 30 to 40 weight percent which might be referred to as being primarily a paraffinic oil, of a relatively high Tg as measured in accordance with ASTM D3418 in order to promote processing of the uncured rubber composition with its high content of functionalized styrene/butadiene rubber.

In the description of this invention, terms such as "compounded rubber", "rubber compound" and "compound", if used herein, refer to rubber compositions containing of at least one elastomer blended with various ingredients, including curatives such as sulfur and cure accelerators. The terms "elastomer" and "rubber" may be used herein interchangeably unless otherwise indicated. It is believed that such terms are well known to those having skill in such art. The pour point of a rubber processing oil is the temperature at (or below) which the oil ceases to flow.

Proportions of ingredients for the rubber composition are sometimes expressed as parts by weight per 100 parts of rubber, or elastomer, in the rubber composition and referred to by the term "phr".

US-A-2014/135437 describes a rubber composition comprising 70 phr S-SBR, 30 phr cis 1,4-polybutadiene rubber, 69 phr of a filler, 5 phr of a coupling agent and 20 phr of a naphthenic processing oil.

### Disclosure and Practice of the Invention

The invention relates to a rubber composition in accordance with claim 1 and to a tire tread and a pneumatic tire in accordance with claims 9 and 10 respectively.

Dependent claims refer to preferred embodiments of the invention.

In accordance with a preferred aspect of this invention, a pneumatic tire is provided with a circumferential tread having a running surface (ground-contacting surface) which is a rubber composition comprised of, based upon parts by weight per 100 parts by weight of rubber (phr):
(A) at least one conjugated diene-based elastomer comprising:
   (1) 82 to 90 phr of a solution polymerization prepared styrene/butadiene rubber (SSBR),
   (2) from 10 to 18 phr of a cis 1,4-polybutadiene rubber (BR),
   (3) optionally from zero to 8, alternately from 5 to 8, phr of cis 1,4-polyisoprene rubber, desirably natural cis 1,4-polyisoprene rubber, having a Tg in a range of from -65°C to -70°C;
(B) a reinforcing filler in an amount of from 50 to 120 phr, alternatively 50 to 80, phr of the rubber composition, wherein the reinforcing filler comprises:
   (1) silica, preferably precipitated silica (amorphous precipitated silica), or
   (2) combination of said precipitated silica and a rubber reinforcing carbon black where filler contains from 2 to 15, alternatively from 2 to 10, alternately from 2 to 6, phr of said rubber reinforcing carbon black;
(C) a coupling agent having a moiety (e.g. a siloxy moiety) reactive with hydroxyl groups (e.g. silanol groups) contained on the surface of said silica and another different moiety (e.g. sulfur) interactive with at least one of said conjugated diene-based elastomers; and
(D) 24 to 50 phr of paraffinic/naphthenic rubber processing oil having a pour point in the range of -80°C to 0°C and comprised of from 30 to 55 weight percent paraffinic oil and 25 to 50 weight percent naphthenic oil.

A significant aspect of the invention is to provide a specific range of concentrations for the generation of silica-rich tread rubber composition with a very low level of rubber reinforcing carbon black combined with a high level of functionalized styrene/butadiene elastomer.

In practice the said coupling agent for the silica or precipitated silica comprises a bis-(3-alkoxysilylalkyl) polysulfide having an average of from 2 to 2.6, connecting sulfur atoms in its polysulfide bridge or an alkoxyorganomercaptosilane. The bis-(3-alkoxysilylalkyl) polysulfide may comprise bis-(3-ethoxysilylpropyl) polysulfide.

In one embodiment, the styrene/butadiene elastomer (SSBR) has a styrene content in a range of from 10 to 50 percent, preferably from 15 to 25 percent.

In one embodiment, the styrene/butadiene elastomer is a functionalized styrene/butadiene elastomer containing end-chain or in-chain positioned functional groups comprising at least one of alkoxysilane, primary amine and thiol groups. For example, the functional groups may comprise alkoxysilane groups and at least one of primary amine and thiol groups. The end-chain functional groups may be incorporated during polymerization of the styrene and 1,3-butadiene monomers with a functional group containing polymerization initiator. The in-chain functional groups may be added, for example, to the elastomer by copolymerization of the styrene and 1,3-butadiene monomers with an appropriate functional group containing material.

In a further embodiment, the styrene/butadiene elastomer or functionalized styrene/butadiene elastomer may be a tin or silicon coupled elastomer.

In one embodiment, the cis 1,4-polybutadiene rubber is a specialized cis 1,4-polybutadiene rubber having a microstructure comprising 93 to 98 percent cis 1,4-isomeric units, 1 to 3 percent trans 1,4-isomeric units and 0.3 to 1 percent vinyl 1,2-content; a number average molecular weight (Mn) in a range of from 200,000 to 450,000 with a heterogeneity index, sometimes referred as a polydispersity index (Mw/Mn) in a range of from 1.5 to 2.5, and a Tg in a range of from -90°C to -109°C;

It is to be appreciated that such specialized polybutadiene rubber is significantly different from a polybutadiene rubber having a microstructure comprising 96 to 99 percent cis 1,4-isomeric units, 0.1 to 1 percent trans 1,4-isomeric units and 1 to 3 percent vinyl 1,2-content; a much lower number average molecular weight (Mn) in a range of from 75,000 to 150,000 with a much higher heterogeneity index (Mw/Mn) in a range of from 3/1 to 5/1 produced with a nickel catalyst.

In particular, the specialized polybutadiene rubber for evaluation for use in this invention is likely be beneficially tougher because of its significantly higher weight average molecular weight, however more difficult to process (e.g. extrusion through a die to form a shaped rubber component) because of its significantly lower heterogeneity index.

For the functionalized styrene/butadiene rubber (functionalized SSBR), in one embodiment the alkoxysilyl group comprises at least one of methoxysilyl group and ethoxysilyl group.

The functionalized SSBR containing in-chain/end-chain functionalization might be produced, for example, by co-polymerizing styrene and 1,3-butadiene monomers in a hydrocarbon solvent by anionic polymerization using an organic alkali metal and/or an organic alkali earth metal as an initiator, followed by subsequently adding a terminating agent compound containing a primary amino group protected with a protective group and/or a thiol group protected with a protecting group and an alkoxysilyl group to react it with a living polymer chain terminal at the time when the polymerization has substantially completed to an extent desirable, followed by deblocking of the protective group, for example, by hydrolysis or other appropriate procedure. In one embodiment, such functionalized SSBR may be prepared, for example, according to US-B- 7,342,070.

In one embodiment, the compound having a protected primary amino group and an alkoxysilyl group may include, for example, one or more of N,N-bis(trimethylsilyl)aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)-aminoethyltriethoxysilne, N,N-bis(trimethylsilyl)aminoethylmethyldimethoxysilane, N,N-bis(trimethylsilyl)aminoethylmethyldiethoxysilane, etc., and preferred are 1-trimethylsilyl-2,2-dimethoxy-1-aza-2-silacyclopentane, N,N-bis(trimethylsilyl) aminopropylmethyldimethoxysilane and N,N-bis(trimethylsilyl)aminopropylmethyldiethoxysilane. In one embodiment, the compound having a protected primary amino group and an alkoxysilyl group is N,N-bis(trimethylsilyl)aminopropyltriethoxysilane.

A representative example of functionalized SSBR is the Styron Sprintan SLR 4602 SSBR.

In practice, such specialized polybutadiene elastomer may be prepared, for example, by polymerization of 1,3-butadiene monomer in an organic solvent solution in the presence of a catalyst system comprised of neodymium compound, an aluminum alkyl and an aluminum chloride delivering compound, so long as it possesses the aforesaid microstructure, molecular weight and heterogeneity index. Representative of neodymium compounds are, for example, neodymium neodecanoate and neodymium octanoate. The neodymium compounds might be derived from a neodymium carboxylate soap such as, for example Nd(R-C00)₃. Representative of aluminum alkyl compounds are, for example, triisobutylaluminum (TIBA) and diisobutylaluminum hydride (DIBAH). Representative of aluminum chloride delivering compounds is, for example, diethylaluminum chloride.

For this evaluation, a purpose of inclusion of the polybutadiene is to promote higher rebound values for the rubber composition which is representative of lower hysteresis property which, in turn, it is predictive of less internal heat generation during service of the tire, and therefore less temperature build-up for the rubber composition when it is being worked and predictive of better (lower) rolling resistance for a tire with a tread of such rubber composition which contains the specialized polybutadiene rubber. A further purpose is to promote greater abrasion resistance of the rubber composition which is predictive of better resistance to tread wear for a tire with such rubber composition which contains the specialized polybutadiene rubber.

For this evaluation, a purpose of inclusion of the functionalized SSBR is also to promote higher rebound values as indicative of lower hysteresis for the rubber composition which is predictive of less internal heat generation during service of the tire, and therefore less temperature build-up for the rubber composition when it is being worked, and predictive of beneficial (lower) rolling resistance for a tire with a tread of such rubber composition which contains the functionalized SSBR.

In one embodiment, the styrene-butadiene rubber may be prepared, for example, as disclosed in US-B-7,342,070. In another embodiment, the styrene-butadiene rubber may be prepared, for example, as disclosed in US-B- 8,217,103 and US-B-8,569,409.

In practice, the elastomers utilized in the rubber composition are exclusive of polymers and copolymers of isobutylene, including halogen modifications thereof.

In the practice of this invention, use of reinforcing filler as precipitated silica or precipitated silica with only a minimal amount of carbon black (e.g. a cosmetic amount of the carbon black sufficient to color the rubber composition black) is to promote better lower hysteresis and therefore higher rebound of the tread rubber to thereby promote lower rolling resistance (less rolling resistance) for a tire with a tread of such rubber composition.

The BET surface area of the silica, as measured using nitrogen gas, may, for example, be in a range of 50 to 300, alternatively 120 to 200, square meters per gram. The silica may also have a dibutylphthalate (DBP) absorption value in a range of, for example, 100 to 400, and usually 150 to 300 cc/g.

Various commercially available silicas may be considered for use in this invention such as, for example only and without limitation, silicas commercially available from PPG Industries under the Hi-Sil trademark with designations 210 and 243, silicas available from Solvay, with designations of Zeosil 1165MP and Zeosil 165GR; silicas available from Evonic with designations VN2, VN3 and 3770GR; and from Huber as Zeopol 8745.

In practice, a silica coupling agent is typically used together with the silica to couple the silica to diene-based elastomers in the rubber composition to aid, or enhance, the reinforcement of the rubber with the silica. Such coupling agents have a moiety reactive with hydroxyl groups (e.g. silanol groups) contained on the silica and another different moiety interactive with the diene-based elastomers in the rubber composition. Coupling agents comprise bis(3-ethoxysilylpropyl) polysulfide having an average of from 2 to 2.6 connecting sulfur atoms in its polysulfidic bridge and of alkoxyorganomercaptosilane.

In practice, the silica coupling agent may, if desired, be premixed, or prereacted, with the silica or added to the rubber mixture together with the silica during the rubber/silica processing, or mixing, stage. If the coupling agent and silica are added separately to the rubber mix during the rubber/silica mixing, or processing stage, it is considered that the coupling agent then combines in situ with the silica and elastomer(s).

It is readily understood by those having skill in the art that the rubber compositions of the tread would be compounded with conventional compounding ingredients including the aforesaid reinforcing fillers such as carbon black and silica, as hereinbefore discussed, in combination with a silica coupling agent, as well as antidegradant(s), processing oil as hereinbefore defined, stearic acid or a zinc stearate, zinc oxide, sulfur-contributing material(s) and vulcanization accelerator(s) as hereinbefore defined.

Antidegradants are typically of the amine or phenolic type. While stearic acid is typically referred to as a rubber compounding ingredient, it may be pointed out that the ingredient itself is usually obtained and used as a mixture of organic acids primarily composed of stearic acid with at least one of oleic acid, linolenic acid and/or palmitic acid normally contained in the stearic acid as typically used. Such material or mixture is conventionally referred to in the rubber compounding art as stearic acid.

Where normal or typical rubber compounding amounts or ranges of amounts of such additives are used, they are not otherwise considered as a part of the invention. For example, some of the ingredients might be classified, in one aspect, as processing aids. Such processing aids may be, for example, waxes such as microcrystalline and paraffinic waxes typically used in a range of 1 to 5 phr and often in a range of 1 to 3 phr, and resins, usually as tackifiers, such as, for example, synthetic hydrocarbon and natural resins typically used in a range of 1 to 5 phr and often in a range of 1 to 3 phr. A curative might be classified as a combination of sulfur and sulfur cure accelerator(s) for the rubber compound (usually simply referred to as accelerator) or a sulfur donor/accelerator. In a sulfur and accelerator(s) curative, the amount of free sulfur added to the rubber composition, in addition to the sulfur generating bis(3-triethoxysilylpropyl) polysulfide coupling agent, is in a range of 1 to 5 phr and more generally in a range of 1.5 to 2.5 phr in order to promote cross-link density of the cured rubber composition; and the accelerator(s), often of the sulfenamide type, may be used, for example, in a range of 0.5 to 5 phr and perhaps in a range of 2 to 4 phr. The ingredients, including the elastomers but exclusive of sulfur and accelerator curatives, are normally first mixed together in at least one and often in a series of at least two sequential, mixing stage(s), although sometimes one mixing stage might be used, to a temperature in a range of 130°C to 140°C, and such mixing stages are typically referred to as non-productive mixing stages. Thereafter, the sulfur and accelerators, and possibly one or more retarders and one or more antidegradants, are mixed therewith to a temperature of 90°C to 120°C and is typically referred as a productive mix stage.

After mixing, the compounded rubber can be fabricated such as, for example, by extrusion through a suitable die to form a tire component such as, for example, a tire tread strip. The tire tread rubber strip is then typically built onto a sulfur curable tire carcass and the assembly thereof shaped and cured in a suitable mold under conditions of elevated temperature and pressure by methods well known to those having skill in such art.

The invention may be better understood by reference to the following example in which the parts and percentages are by weight unless otherwise indicated.

### EXAMPLE I

Rubber compositions are prepared to evaluate combinations of various ingredients to achieve significant cured rubber properties. Experimental rubber Sample A was prepared to evaluate promoting both rolling resistance (indicated by relatively high rebound values at 100°C), wet traction (indicative by relatively low rebound values at 0°C) and resistance to tread wear (e.g. resistance to abrasion for the rubber composition).

Basic ingredients for the rubber compositions are illustrated in Table 1 and reported in terms of parts by weight per 100 parts rubber (phr) unless otherwise indicated.

The rubber compositions can be prepared by mixing the elastomers(s) without sulfur and sulfur cure accelerators in a first non-productive mixing stage (NP-1) in an internal rubber mixer for about 5 minutes to a temperature of about 160°C. The rubber mixture was then mixed in a second non-productive mixing stage (NP-2) in an internal rubber mixer for 5 minutes to a temperature of 160°C with further addition of ingredients. The rubber mixture was then mixed in a third non-productive mixing stage (NP-3) in an internal rubber mixer for 4 minutes to a temperature of 150°C without further addition of ingredients. The resulting rubber mixture was then mixed in a productive mixing stage (PR) in an internal rubber mixer with sulfur and sulfur cure accelerator(s) being added for 3 minutes to a temperature of 110°C. The rubber composition was dumped from each mixer and sheeted out and cooled to below 50°C between each of the non-productive mixing steps and prior to the productive mixing step.

**Table 1**

| Material | |
|---|---|
| Non-productive mixing | Parts by Weight (phr) |
| Functionalized SBR rubber¹ | 82 |
| Specialized cis 1,4-butadiene rubber2 | 18 |
| Microcrystalline wax | 1.5 |
| Fatty acid³ | 3 |
| Naphthenic rubber processing oil⁴ | 25 |
| Zinc oxide | 0.5 |
| Rubber reinforcing carbon black (N330) | 4 |
| Precipitated silica⁵ | 80 |
| Silica coupling agent⁶ | 8 |
| Antidegradant | 2 |
| | |

| Productive mixing | |
|---|---|
| Sulfur | 1.6 |
| Accelerators⁷ | 4.5 |
| Zinc oxide | 1.25 |
| Antidegradant | 0.75 |

| | |
|---|---|
| ¹Functionalized SBR as a solution polymerization prepared styrene/butadiene rubber functionalized with an alkoxysilane group and functional group comprised of a thiol group and having a Tg in a range of from -30° to -10°C as SLR SE4602™. ²Polybutadiene rubber having a microstructure comprising 93 to 98 percent cis 1,4-isomeric units, 1 to 3 percent trans 1,4-isomeric units and 0.3 to 1 percent vinyl 1,2-content; a number average molecular weight (Mn) in a range of from 230,000 to 250,000 with a heterogeneity index (Mw/Mn) in a range of from 1.5/1 to 2/1, and a Tg in a range of from -104°C to -109°C, as CB25™ from Lanxess. ³Fatty acid comprising primarily of a combination of stearic acid, oleic and palmitic acid ⁴Rubber processing oil having a pour point of -50°C which is a paraffinic/naphthenic oil having a paraffinic oil content of 36 to 48 weight percent and a naphthenic oil content of 39 to 54 weight percent. ⁵As Zeosil 1165 MP™ from Rhodia ⁶Bis-(3-triethoxysilylpropyl) poly sulfide having an average in a range of from 2 to 2.6 connecting sulfur atoms in its polysulfidic bridge as Si266™ from Evonic reported in the Table as the composite. ⁷Accelerators as a combination of sulfenamide and diphenylguanidine | |

The prepared rubber compositions were cured at a temperature of 160°C for 14 minutes and the resulting cured rubber samples evaluated for various physical properties (rounded numbers are reported herein) as shown in the following Table 2.

**Table 2**

| Properties | Experimental |
|---|---|
| RPA¹ | |
| Uncured G', 0.83 Hz, 100°C, 15% strain (MPa) | 0.34 |
| Cured G', 11 Hz, 40°C, 1% strain (MPa) | 5.2 |
| Tan delta, 11 Hz, 40°C, 1% strain | 0.114 |
| | |

| ATS², stress-strain | |
|---|---|
| Tensile strength (MPa) | 18.3 |
| Elongation at break (%) | 335 |
| 300% modulus, ring, (MPa) | 15.8 |
| | |

| Rebound value(Zwick) | |
|---|---|
| 0°C (lower is better for predictive beneficial wet traction for a tire tread) | 15 |
| 23°C | 40.1 |
| 100°C (higher is better for predictive lower tire rolling resistance contributed by a tire component, for example a tire tread) | 70.3 |
| | |

| Shore A Hardness | |
|---|---|
| 23°C | 64 |
| 100°C | 63 |
| | |

| DIN Abrasion | |
|---|---|
| Rel. Vol. Loss | 108 |

| | |
|---|---|
| ¹Rubber process analyzer instrument (e.g. Rubber Process Analyzer RPA 2000) ²Automated Testing System instrument by Instron for determining ultimate tensile strength, ultimate elongation, modulii, etc., of rubber samples | |

## Claims

1. A rubber composition comprising, based upon parts by weight per 100 parts by weight of rubber (phr):
(A) elastomers comprising:
(1) from 82 to 90 phr of a solution polymerization prepared functionalized styrene/butadiene rubber (SSBR) wherein said SSBR is functionalized with a combination of alkoxysilane group and at least one of primary amine and thiol units wherein said rubber has a Tg (ASTM D3418) in a range of from -40 to -10°C;
(2) from 10 to 18 phr of a cis 1,4-polybutadiene rubber;
(B) from 50 to 120 phr of a reinforcing filler comprising:
(1) silica, or
(2) combination of said silica and a carbon black where said reinforcing filler contains from 2 to 15, alternatively from 2 to 10 phr, of said carbon black; and
(C) a coupling agent having a moiety reactive with hydroxyl groups contained on the surface of said silica and another different moiety interactive with said conjugated diene-based elastomer(s), wherein said coupling agent comprises a bis-(3-ethoxysilylpropyl) polysulfide having an average of from 2 to 2.6 connecting sulfur atoms in its polysulfide bridge;
(D) from 24 to 50 phr of paraffinic/naphthenic rubber processing oil having a pour point in the range of -80°C to 0°C and a paraffinic oil content of from 30 to 55 weight percent and a naphthenic oil content of from 25 to 50 weight percent; and
wherein said functionalized SSBR has a bound styrene content in a range of from 10 to 50 percent.

2. The rubber composition of claim 1 wherein the cis 1,4-polybutadiene rubber has a microstructure comprising 93 to 98 percent cis 1,4-isomeric units, 1 to 3 percent trans 1,4-isomeric units and 0.3 to 1 percent vinyl 1,2-content; a number average molecular weight (Mn) in a range of from 200,000 to 450,000 or from 200,000 to 400,000 with a heterogeneity index (Mw/Mn) in a range of from 1.5 to 2.5 or from 1.5 to 2, and a Tg (ASTM D3418) in a range of from -100°C to -109°C or from -90°C to - 109°C.

3. The rubber composition of claim 1 or 2 wherein the silica is precipitated silica and/or the carbon black is a rubber reinforcing carbon black.

4. The rubber composition of at least one of the previous claims, wherein the alkoxysilyl group of the functionalized SBR comprises at least one of a methoxysilyl group and an ethoxysilyl group.

5. The rubber composition of at least one of the previous claims, wherein the SSBR is functionalized with a combination of alkoxysilane group and thiol units.

6. The rubber composition of at least one of the previous claims comprising from 2 to 6 phr of said carbon black.

7. The rubber composition of at least one of the previous claims wherein the paraffinic/naphthenic rubber processing oil has paraffinic oil content of from 45 to 55 weight percent and a naphthenic oil content of from 30 to 40 weight percent.

8. The rubber composition of at least one of the previous claims wherein the alkoxysilyl group of the functionalized SBR comprises an ethoxysilyl group.

9. A tire tread comprising the rubber composition in accordance with at least one of the previous claims.

10. A pneumatic tire comprising the rubber composition in accordance with at least one of the previous claims 1 to 8.

11. The tire of claim 10 wherein the rubber composition is used in the tread of said tire.

## Patentansprüche

1. Kautschukzusammensetzung, umfassend, auf Basis von Gewichtsteilen je 100 Gewichtsteile Kautschuk (phr):
(A) Elastomere, umfassend:
(1) 82 bis 90 phr eines durch Lösungspolymerisation hergestellten funktionalisierten Styrol-Butadien-Kautschuks (SSBR), wobei das SSBR mit einer Kombination von Alkoxysilangruppe und mindestens einem von primären Amin- und Thioleinheiten funktionalisiert ist, wobei der Kautschuk eine Tg (ASTM D3418) im Bereich von -40 bis -10°C aufweist;
(2) 10 bis 18 phr eines cis-1,4-Polybutadienkautschuks;
(B) 50 bis 120 phr eines Verstärkungsfüllstoffs, umfassend:
(1) Silika, oder
(2) eine Kombination des Silikas und eines Carbon Blacks, wobei der Verstärkungsfüllstoff 2 bis 15, alternativ 2 bis 10, phr des Carbon Blacks enthält; und
(C) einen Haftvermittler, der einen Anteil, der mit an der Oberfläche des Silikas enthaltenen Hydroxylgruppe reaktiv ist, und einen anderen, verschiedenen Anteil, der mit dem bzw. den Elastomer(en) auf Basis konjugierten Diens in Wechselwirkung tritt, aufweist, wobei der Haftvermittler ein bis(-Ethoxysilylpropyl)polysulfid mit einem Durchschnitt von 2 bis 2,6 verbindenden Schwefelatomen in seiner Polysulfidbrücke umfasst;
(D) 24 bis 50 phr paraffinisches/naphthenisches Kautschukprozessöl mit einem Stockpunt im Bereich von -80°C bis 0°C und einem Gehalt an paraffinischem Öl von 30 bis 55 Gewichtsprozent und einem Gehalt an naphthenischem Öl von 25 bis 50 Gewichtsprozent; und
wobei das funktionalisierte SSBR einen Gehalt an gebundenem Styrol im Bereich von 10 bis 50 Prozent aufweist.

2. Kautschukzusammensetzung nach Anspruch 1, wobei der cis-1,4-Polybutadienkautschuk eine Mikrostruktur aufweist, umfassend 93 bis 98 Prozent cis-1,4-Isomereinheiten, 1 bis 3 Prozent trans-1,4-Isomereinheiten und 0,3 bis 1 Prozent Vinyl-1,2-Gehalt; eine zahlenmittlere Molmasse (Mn) im Bereich von 200.000 bis 450.000 oder von 200.000 bis 400.000 mit einer Heterogenitätszahl (Mw/Mn) im Bereich von 1,5 bis 2,5 oder von 1,5 bis 2, und eine Tg (ASTM D3418) im Bereich von -100°C bis -109°C oder von -90°C bis -109°C.

3. Kautschukzusammensetzung nach Anspruch 1 oder 2, wobei das Silika ausgefälltes Silika ist und/oder das Carbon Black ein Kautschukverstärkungs-Carbon Black ist.

4. Kautschukzusammensetzung nach mindestens einem der vorhergehenden Ansprüche, wobei die Alkoxysilylgruppe des funktionalisierten SBR mindestens eines einer Methoxysilylgruppe und einer Ethoxysilylgruppe umfasst.

5. Kautschukzusammensetzung nach mindestens einem der vorhergehenden Ansprüche, wobei das SSBR mit einer Kombination von Alkoxysilangruppe und Thioleinheiten funktionalisiert ist.

6. Kautschukzusammensetzung nach mindestens einem der vorhergehenden Ansprüche, umfassend 2 bis 6 phr besagten Carbon Blacks.

7. Kautschukzusammensetzung nach mindestens einem der vorhergehenden Ansprüche, wobei das paraffinische/naphthenische Kautschukprozessöl einen Gehalt an paraffinischem Öl von 45 bis 55 Gewichtsprozent und einen Gehalt an naphthenischem Öl von 30 bis 40 Gewichtsprozent aufweist.

8. Kautschukzusammensetzung nach mindestens einem der vorhergehenden Ansprüche, wobei die Alkoxysilylgruppe des funktionalisierten SBR eine Ethoxysilylgruppe umfasst.

9. Reifenlauffläche, umfassend die Kautschukzusammensetzung gemäß mindestens einem der vorhergehenden Ansprüche.

10. Luftreifen, umfassend die Kautschukzusammensetzung gemäß mindestens einem der vorhergehenden Ansprüche 1 bis 8.

11. Reifen nach Anspruch 10, wobei die Kautschukzusammensetzung in der Lauffläche des Reifens verwendet ist.

## Revendications

1. Composition de caoutchouc comprenant, en se basant sur des parties en poids par 100 parties en poids caoutchouc (phr) :
(A) des élastomères comprenant :
(1) de 82 à 90 phr de caoutchouc de styrène/butadiène fonctionnalisé préparé via une polymérisation en solution (SSBR), dans lequel ledit SSBR est fonctionnalisé avec une combinaison d'un groupe alcoxysilane et d'au moins une unité choisie parmi une unité d'amine primaire et une unité de thiol, dans laquelle ledit caoutchouc possède une valeur Tg (ASTM D3418) dans une plage de -40 à - 10 °C;
(2) de 10 à 18 phr d'un caoutchouc de 1,4-cis-polybutadiène ;
(B) de 50 à 120 phr d'une matière de charge pour le renforcement comprenant :
(1) de la silice ; ou
(2) une combinaison de ladite silice et d'un noir de carbone, dans lequel ladite matière de charge pour le renforcement contient de 2 à 15, en variante de 2 à 10 phr dudit noir de carbone ; et
(C) un agent de couplage possédant une fraction apte à réagir avec des groupes hydroxyle contenus à la surface de ladite silice et une autre fraction différente qui entre en interaction avec lesdits élastomères à base de diènes conjugués ; dans laquelle ledit agent de couplage comprend un bis-(3-éthoxysilylpropyl) polysulfure possédant en moyenne de 2 à 2,6 atomes de soufre de liaison dans son pont polysulfure ;
(D) de 24 à 50 phr d'une huile de traitement de caoutchouc de type paraffinique/naphténique possédant un point d'écoulement dans la plage de -80 °C à 0 °C et une teneur en huile paraffinique de 30 à 55 % en poids et une teneur en huile naphténique de 25 à 50 % en poids ; et
dans laquelle ledit SSBR fonctionnalisé possède une teneur en styrène lié dans la plage de 10 à 50 %.

2. Composition de caoutchouc selon la revendication 1, dans laquelle le caoutchouc de 1,4-cis-polybutadiène possède une microstructure comprenant des unités isomères 1,4-cis à concurrence de 93 à 98 %, les unités isomères 1,4-trans à concurrence de 1 à 3 %, et une teneur en groupes 1,2-vinyle à concurrence de 0,3 à 1 % ; un poids moléculaire moyen en nombre (Mn) dans la plage de 200.000 450.000 ou de 200.000 à 400.000 avec un indice d'hétérogénéité (Mw/Mn) dans une plage de 1,5 à 2,5 ou de 2,5 à 2 ; et une valeur Tg (ASTM D3418) dans une plage de -100 à - 109 °C ou de -90 à - 100 °C.

3. Composition de caoutchouc selon la revendication 1 ou 2, dans laquelle la silice est de la silice précipitée et/ou le noir de carbone est un noir de carbone pour le renforcement du caoutchouc.

4. Composition de caoutchouc selon au moins une des revendications précédentes, dans laquelle le groupe alcoxysilyle du SBR fonctionnalisé comprend au moins un groupe choisi parmi un groupe méthoxysilyle et un groupe éthoxysilyle.

5. Composition de caoutchouc selon au moins une des revendications précédentes, dans laquelle le SSBR est fonctionnalisé avec une combinaison d'un groupe alcoxysilane et d'unités de thiol.

6. Composition de caoutchouc selon au moins une des revendications précédentes, comprenant de 2 à 6 phr dudit noir de carbone.

7. Composition de caoutchouc selon au moins une des revendications précédentes, dans laquelle l'huile de traitement de caoutchouc de type paraffinique/naphténique possède une teneur en huile paraffinique de 45 à 55 % poids et teneur en huile naphténique de 30 à 40 % poids.

8. Composition de caoutchouc selon au moins une des revendications précédentes, dans laquelle le groupe alcoxysilyle du SBR fonctionnalisé comprend un groupe éthoxysilyle.

9. Bande de roulement de bandage pneumatique comprenant la composition de caoutchouc selon au moins une des revendications précédentes.

10. Bandage pneumatique comprenant la composition de caoutchouc selon au moins une des revendications précédentes 1 à 8.

11. Bandage pneumatique selon la revendication 10, dans lequel la composition de caoutchouc est utilisée dans la bande de roulement du bandage pneumatique.
